(19) Europäisches Patentamt
European Patent Office
Office européen des brevets

(11) Publication number: 0 337 059 B1

(12) # EUROPEAN PATENT SPECIFICATION

(45) Date of publication of patent specification: 18.09.91 Bulletin 91/38

(51) Int. Cl.$^5$: B60R 1/06

(21) Application number: 89101303.9

(22) Date of filing: 26.01.89

(54) **Holding device of a mirror element for a rearview mirror.**

(30) Priority: 11.04.88 JP 47799/88

(43) Date of publication of application: 18.10.89 Bulletin 89/42

(45) Publication of the grant of the patent: 18.09.91 Bulletin 91/38

(84) Designated Contracting States: DE FR GB IT

(56) References cited:
EP-A- 0 276 677
DE-A- 2 919 023
DE-A- 3 148 525
US-A- 4 645 164

(73) Proprietor: MURAKAMI KAIMEIDO CO., LTD
12-25, Miyamoto-cho Shizuoka-shi
Shizuoka-Ken, 422 (JP)

(72) Inventor: Ozaki, Tadahiko
2-23, Hontohri 2-chome
Shizuoka-shi Shizuoka-ken, 420 (JP)

(74) Representative: Riederer Freiherr von Paar zu Schönau, Anton et al
Van der Werth, Lederer & Riederer Freyung 615 Postfach 2664
W-8300 Landshut (DE)

EP 0 337 059 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

### FIELD OF THE INVENTION

This invention relates to a rearview mirror for a motor vehicle. Particularly, the invention relates to a two pieces type mirror holder of a mirror element for a rearview mirror for a motor vehicle as specified in the preamble of claim 1, for example as disclosed in US-A-4645164.

### DESCRIPTION OF THE PRIOR ART

A rearview mirror for a motor vehicle has a mirror housing, a mirror element disposed at the rear surface — always related to the driving direction of the vehicle — of the housing and a supporting means provided at the front side of the mirror element for adjusting the tilting angle of the mirror element. The mirror element comprises a mirror plate (glass mirror plate) and a mirror holder for fixing the mirror plate thereto by a bonding means or the like.

The mirror holders are structurally classified into two types roughly ; one is a one piece type mirror holder integrally provided with a spherical pivot protrudedly formed on the front surface of a central portion thereof and the other is a composite type mirror holder in which a detachable holder plate separated from a mirror body of the mirror holder is preliminary molded and is engaged into an aperture provided at the central portion of the body of the mirror holder, thereby both are assembled into a unit.

The composite type mirror holder has recently become more popular for reason of better solving the problem that a one piece type mirror holder is insufficient in assembling a structure for adjusting the tilting angle of the mirror. A composite type mirror holder is disclosed in U.S.Pat.No. 4,645,164. The mirror holder has a mirror body mounted with a mirror plate on the back surface thereof, a holder plate engaging an aperture provided in the mirror holder and a bolt shaped supporting means prepared as another component. The holder plate has several external lugs protruded outwardly and a periphery provided with several edges and the mirror holder has apertures shaped so as to be opposite to the holder plate and guiding members for detachably assembling the bolt shaped supporting means to the front surface of the mirror holder. Further the bolt shaped supporting means has a cam portion for securing the holder plate in preventing it from comming off from the aperture and a structure for determining the position of itself.

The conventional mirror holder of this type has problems such as that the holder plate does not have sufficient holding force by merely engaging the holder plate in the aperture formed in the holder and the holder plate is easily disengaged due to a vibration or an impact while the vehicle is traveling, to cause the engaged portion to be possibly loosened. Therefore it is conventionally necessary for the mirror holder to be assembled so that the holder plate is engaged into the aperture formed in the holder, and thereafter the supporting means is mounted to the guiding means in order to hold the holder plate for preventing it from disengaging therefrom. As described above, it is necessary for the conventional mirror holder that another component is prepared in order to secure the holder plate to the body of the mirror holder and there has been an inevitable defect that the process of assembling becomes complicated.

It is therefore an object of present invention to provide a two pieces type mirror holder for a rearview mirror which has a sufficient holding strength for the mirror plate.

The holding device of the present invention is to provide a two pieces type mirror holder which can precisely engage the mirror plate, further can be readily associated without another component separated therefrom. It is desired that the holding device comprises a two pieces type mirror holder.

### SUMMARY OF THE INVENTION

The holding device of a mirror element for a rearview mirror of the invention includes a supporting member, a mirror holder having a mirror plate, a holder plate, a pivot means for tiltably supporting the holder plate to the supporting member, means for latching the mirror holder to the holder plate, which is formed between the holder plate and the mirror holder facing to each other respectively and further at the upper portion of the pivot means, and a fixing means for connecting and locking the holder plate to the mirror holder, which is formed between the holder plate and the mirror holder facing to each other and further at the lower portion of the pivot means.

The latching means preferably comprises a hook shaped hook hanger formed at the upper rear portion of the mirror holder, a hole formed at the upper of the holder plate to allow the hook hanger to penetrate thereinto, and a supporting rod provided at the upper portion of the hole to fasten the hook hanger.

The fixing means preferably comprises a pair of sockets formed at the lower portion of the mirror holder, a bearing member disposed between the sockets and a resilient pair of studs formed at the lower front portion of the holder plate to insert into each of the sockets.

The bearing member is preferably resiliently and fixedly held by each of the studs on both sides which are engaged into the sockets respectively.

The bearing means may have a recess opening rearwardly and be provided with an undercut portion to which the end of the studs is fastened to the outer wall along the recess. A filler material such as plastics or rubber materials filled in the inner of the bearing member when it is molded or assembled is available for adjusting the bending or modifying degree of the bearing member.

On each contacting surface where each of the studs is penetrated into the sockets, it is possible that one is provided with a recess for determining the location for the studs and the sockets and the other is provided with a projection engaging with the recess.

The means for adjustably supporting the mirror element is not limited to comprise the remote control type actuator unit adjustable for the reflecting angle of the mirror from the compartment of the vehicle and is also possible to comprise a bearing seat merely provided in the mirror housing. The supporting member has a spherical socket supporting the pivot means disposed on the holder plate and is engaged by a connecting member provided with means for adjusting an engaging torque of the pivot means clamped with the spherical socket.

In assembling the rearview mirror, an intermediate assembly or subassembly in which a desired engaging torque is adjusted by adjusting the clamping of the connecting member while associating in advance the holder plate with the actuator unit is constructed. Thereafter the mirror element is approached to the holder plate of the actuator side and a pair of the studs provided at the front lower portion of the holder plate is engaged into a pair of the sockets formed under the mirror holder while the hook type hook hanger of the upper portion of the mirror element is engaged with the supporting member of the upper portion of the holder plate thereby the bearing member disposed between each of the sockets is resiliently and fixedly held by a pair of studs on both sides. When the mirror plate might be damaged or scratched during use, only the mirror element is removed and a mirror element of the same type prepared separately is mounted on the holder plate as described above to recover similarly as a new one.

Further in the present invention, the holder plate is durable for repeatedly mounting on it or removing from it the rear surface of the mirror holder, the holding strength in engaging each other has high preciseness, it is possible to mount or remove the mirror holder and further the holder plate easily, and further the clamping force between the studs and the sockets is adjustable since the pair of studs formed at the lower front surface of the holder plate is inserted into a pair of sockets formed at the lower rear surface of the mirror holder and the bearing member is resiliently held by the pair of studs on both sides.

## BRIEF DESCRIPTION OF THE DRAWINGS

Further objects and advantages of the present invention will be apparent from the following description, reference being had to the accompanying drawings wherein preferred embodiments of the present invention are cleary shown.

Fig. 1 is a sectional view of a rearview mirror according to a preferred embodiment of the present invention ;

Fig. 2 is an enlarged sectional view of a holding device of a mirror element ;

Fig. 3 is a partially cut-away view of the mirror element showing part of the mirror holder ;

Fig. 4 is a back side view of the mirror holder ;

Fig. 5 and Fig. 6 are sectional views cut along V-V and VI-VI lines of Fig. 3 ;

Fig. 7 and Fig. 8 are partially enlarged views of F and G portions of Fig. 6 ;

Fig. 9 is a front view of a holder plate ;

Fig. 10 is a back side view of the holder plate ;

Fig. 11 and Fig. 12 are sectional views cut along XI-XI and XII-XII lines of Fig. 9 ;

Fig. 13 and Fig. 14 are partially enlarged views of H and I portions of Fig. 12 ;

Fig. 15 is a enlarged sectional view showing a modified example of a stud ;

Fig. 16 is an exploded perspective view of the studs separated from a bearing member ;

Fig. 17 is a perspective view showing the state of assembling an actuator unit and the holder plate;

Fig. 18 is a sectional view at the state that the mirror holder is ready for engaging with the holder plate ;

Fig. 19A is a sectional view at the state that the stud is ready for inserting into the socket ; and

Fig. 19B is a sectional view at the state that the stud is engaged with the socket.

## DESCRIPTION OF PREFERRED EMBODIMENTS

Referring now to the drawings, a preferred embodiment of the invention is illustrated therein. Fig. 1 shows an internal structure of a rearview mirror provided with a remote controlled type actuator and Fig. 2 shows a partially enlarged sectional view of some portions of the mirror of Fig. 1.

The assembly of a rearview mirror 10 includes a mirror housing 11, an actuator unit 12 fixed to a base plate 75 in the mirror housing 11 and a mirror element 13 mounted in front of the actuator unit 12 with an adjustable tilting angle in respect to the mirror housing 11. Said mirror element 13 has a mirror plate 14 and a mirror holder 15 for holding the mirror plate so as to be operated and positioned relative to the mirror housing 11. A holder plate 17 is tiltably mounted through connecting means at the rear side of the actuator unit 12. An opening 16 is provided at the center of the mirror holder 15 to allow the holder plate 17 to be detachably mounted therein.

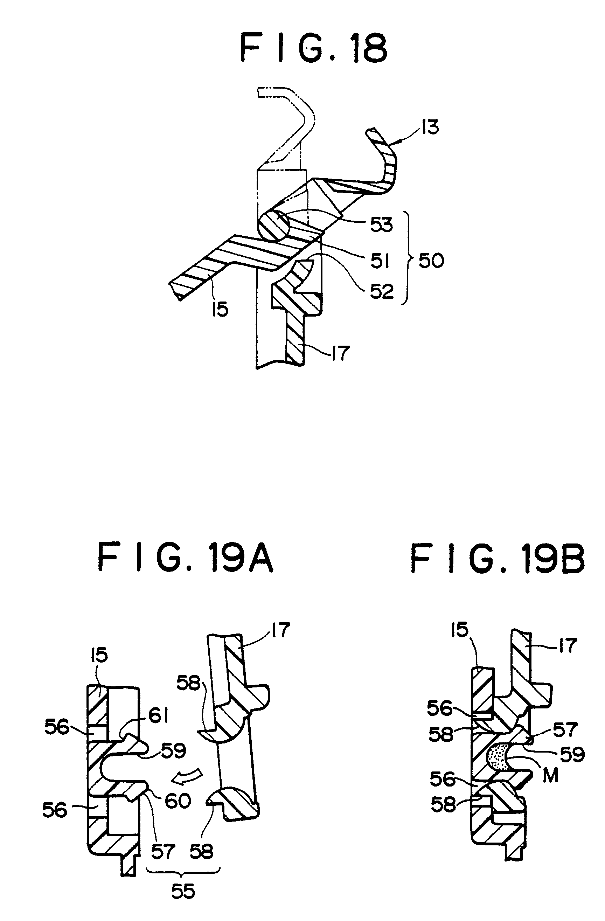

The actuator unit 12 is constructed, as shown in Fig. 2, to separably engage a front housing 18 and a rear housing 19, and has therein two sets of electric motors (not shown), each with a worm (not shown) for forming a drive transmission and a worm wheel 45 (one worm wheel 45 only being shown). At the almost center of the rear housing 19 is provided a double socket-type connecting means 30 to be described later to tiltably support the mirror element 13. The worm wheels 45 of the drive transmission are disposed in the housing at a position separated by a distance from said connecting means 30 as a center, at a right angle of the radii. An adjusting nut 20 is attached to each worm wheel 45, and a movable pivot 21 provided at the end of each adjusting nut 20 is engaged with a spherical seat 22 formed on the forward looking surface of the holder plate 17. An intermediate or subassembly 23 (shown in Fig. 17) comprises the holder plate 17 and the actuator unit 12 mounted thereon. When any of the electric motors is normally or reversely rotated, the respective adjusting nut 20 moves back or forth through the drive transmission, and the reflecting angle of the mirror element 13 is adjusted vertically or horizontally.

The connecting means 30 includes, as shown in Fig. 2, a threaded cylinder 26 protruded from the front housing 18 longer than the thickness of the housing, a tapping screw 42 being provided in the threaded cylinder, and a double ball and socket structure is formed at the periphery of the threaded cylinder. The actuator unit 12 has a cylinder 25 having a height extending from the front housing 18 to the inner surface of the rear housing 19, and the threaded cylinder 26 is positioned on top of the center of the cylinder 25 and penetrates through a through-hole 31 of a bearing seat 28 formed on the rear housing 19. The bearing seat 28 has a spherical socket 29 for receiving a pivot 33 of the side of the holder plate 17, and the lower surface of the bearing seat 28 is contacted with a shoulder 32 of the cylinder 25 wherefrom the threaded cylinder 26 protrudes, penetrating through the through-hole 31 at the center of the recess spherical surfaced socket 29. The tapping screw 42 is screwed into through hole 39 of the threaded cylinder 26 from the rear side.

The mirror holder and the holder plate will be described in detail.

Fig. 3 shows the mirror element 13 in which the mirror holder 15 is partially shown by cutting away the mirror plate 14 partially. The mirror element 13 has the mirror plate 14 engaged with or bonded to the front surface of the mirror holder 15 having the opening 16 at the center thereof.

Fig. 4 shows the rear surface of the mirror holder 15. Numeral 80 within the opening 16 designates the center of the mirror and numeral 81 designates the rotating center of the mirror plate.

Fig. 5 shows the sectional view cut along V-V line of Fig. 3 and Fig. 6 shows the sectional view cut along VI-VI line of Fig. 3.

Fig. 9 and Fig. 10 show the front and rear surface of the holder plate 17. The hollow-spherical segment shaped pivot 33 is formed at the center of the rear surface of the holder plate 17 and has a through-hole 34 at its top and a recess spherical surface 35 inside. A spherical segment shaped cap 37 is engaged with the recess spherical surface 35 of the pivot 33. This cap 37 includes a hollow portion 40 for containing both a helical spring 38 and the threaded cylinder 26 with the through-hole 39 for the tapping screw 42 inserted thereinto from the bottom of the hollow portion 40. The pivot 33 is fixed to the threaded cylinder 26 protruded from the side of the mirror holder by the helical spring 38 and the tapping screw 42 with a washer in the hollow portion 40.

As shown in Fig. 17, the subassembly 23 comprises the holder plate 17 tiltably mounted to the actuator unit 12 through the connecting means 30.

In order to mount the mirror element 13 on the holder plate 17 of the subassembly 23, a latching means 50 and a fixing means 55 (Fig.s 18, 19A) are formed between the mirror holder 15 and the holder plate 17, which are respectively symmetrically disposed over and under the rotating center 81 of the mirror element. A center portion 47 (Fig. 9) of the front central portion of the holder plate 17 is engaged with the opening 16 formed at the central portion of the mirror holder side by utilizing the latching means 50 and the fixing means 55 and a peripheral edge 48 is closely contacted with the back surface of the mirror holder 15 to fulfill the assembling.

The latching means 50 comprises a hook shaped hook hanger 51 provided at an upper clipped portion 54 on the back surface of the mirror holder 15 as shown in Fig. 7, an inserting hole 52 formed in the upper portion of the holder plate 17 as shown in Figs. 12, 13, through which the hook hanger 51 can penetrate, and a supporting rod portion 53 located at the upper portion of the inserting hole 52 for fastening the hook hanger 51. As shown in Fig. 3 and Fig. 4, the latching means 50 is symmetrically located left and right of the perpendicular line including the rotating center 81 of the mirror element.

The fixing means 55 comprises a pair of narrow sockets 56, 56 provided at the lower portion of the mirror holder 15 to be closely contacted with each other, a bendable bearing member 57 disposed between each pair of sockets and a pair of studs 58, 58 formed at the front surface of the holder plate 17 with respect to each pair of sockets. The interval between each pair of studs 58, 58 is measured to be closely engaged with the outer surface of the bearing member 57. The sockets 56, 56 and studs 58, 58 of each respective pair are shown to be located vertically, it is however possible to locate them horizontally upon altering the position thereof by a right angle.

As shown in Fig. 6 and Fig. 8, the bearing member 57 which is made of a plastic material is integrally formed with the mirror holder 15. The bearing member has a recess 59 opening rearwardly and side portions 60 each having an undercut portion 61 to be engaged with the studs 58 (Fig. 9, 10) at the outside of the wall portion along the recess.

A member M (Fig. 19B) made of plastic or rubber materials or the like for adjusting the degree of bending and modifying the bearing member 57 is filled into the recess 59 of the bearing member 57 in order to adjust the modifying degree of the side portions 60 of the bearing member.

Fig. 15 shows a modified example of the studs and Fig. 16 shows an exploded perpendicular view of the bearing member engaging with such studs. As shown in each of the modified examples, a pair of resilient legs 90, 90 are horizontally protruded from the holder plate 17 in a position opposite to a pair of sockets and each of studs 91, 91 is integrally formed with said legs. A pawl 92 connected with the undercut portion 61 of the bearing member 57 is provided at the engaging portion, with the sockets 56 and the studs 91, 91 penetrating thereinto. A protruded portion 93 for determining the location of the studs is formed at the central portion of said studs in parallel to the legs, and in respect of the above a recess 94 engaging with said protruded portion is formed at the bearing member side. Edges of the engaging portions with each of sockets and studs penetrating thereinto are substantially roundish formed to tolerate the repeated associating or detaching.

As described above, the central portion 47 having the pivot 33 is formed at the center of the holder plate 17. As shown in Fig. 9 and Fig. 10, a pair of retainers 43, 43 is vertically formed at said central portion 47. The retainers are provided for engaging with a yoke-like anti-rotation piece 44 protruded from the rear housing 19 as shown in Fig. 2. The spherical bearing seats 22, 22 with a slit engaging with the movable pivot 21 at the top of the adjusting nut 20 of the actuator side are formed at the back side of the pivot plate at positions defining radii intersecting at a right angle, with the pivot 33 as a center. Numeral 72 designates a stopper which is formed for restricting the angle of the mirror in contact with the rear housing 19 when adjusting the inclining angle of the mirror at a plurality of positions thereon.

The operation of the holding device of this embodiment will be described.

The mirror assembly 10 as shown in Fig. 1 is assembled as below. The hollow spherical segment-shaped pivot 33 of the holder plate 17 is first engaged with the spherical socket 29 formed on the rear housing 19 of the actuator unit 12, and the movable pivots at the top of the actuator side adjusting nuts 20 are simultaneously engaged with the spherical seats 22. Then, the spherical segment-shaped cap 37 is engaged within the recess spherical surface 35 of the pivot 33, and clamped with the threaded cylinder 26 by the helical spring 40 and the tapping screw 42 with washer as shown in Fig. 17. The holder plate 17 is mounted by suitable torque by means of the elastic force of the spring 40 and the clamping force of the screw 42.

The subassembly 23 in which the holder plate 17 is mounted in the actuator unit 12 as described above is fixed to the base plate 75 in the mirror housing 11. When fixing, screws (not shows) are inserted into screw holes 49 in the actuator unit 12 and clamped. Thereafter, as shown in Fig. 18, the mirror element 13 is inclined and approached to the holder plate 17. Subsequently, the right and left hook shaped hook hangers 51 of the mirror element side are inserted into the holes 52 of the upper portion of the holder plate 17 to be engaged with the respective supporting rod portions 53 and thereafter the mirror element 13 is rotated anticlockwise in Fig. 18 around the supporting rod portion 53 as a center. While in the lower portion of the mirror element 13 the bearing member 57 is resiliently held by a pair of the studs 58, as shown in Fig. 10, on both sides by inserting said pair of studs 58 into the pair of sockets 56 as shown in Fig. 19A. Resultantly, the central portion 47 of the holder plate side is engaged with the opening 16 of the mirror holder side, and the peripheral edge 48 is simultaneously closely contacted with the flat surface around the opening 16.

The hook hangers 51 have a circular-arc-shaped inner surface 73 to be contacted with approx. 1/3 of the circumference of the supporting rod 53 as shown in an enlarged view in Fig. 18, it is latched while rotating the mirror element 13, with the supporting rod 53 as a center. Even if the studs 58 at the lower portion are removed at rotating time or at finishing the rotation, its hook portions are not easily removed. When the studs 58 and the sockets 56 are engaged with each other, the upper periphery or side portions 60 of the bearing member are easily bended, resultantly the studs 58 are also easily removed therefrom, the member M made of plastics or rubber materials or the like for adjusting the degree of bending is filled into the recess 59 of the bearing member in order to adjust the degree thereof, and it is possible that both of the holder plate and the mirror holder are firmly mounted with each other.

In the embodiment as shown in the drawings, the holder plate 17 is mounted on the front surface of the remote controlled type actuator unit 12, but it is also possible that the holder plate is directly mounted to the base plate 75 mounted in the mirror housing. Further, the terms "upper" and "lower" portion or position of the latching and fixing means are intended to be understood in a generalized meaning, i.e. on opposite sides of the opening 16 or connecting means 30. Though actually higher and lower positions, respectively, are preferred, also an upside-down arrangement or a left side — right side arrangement or anything inbetween is claimed to be covered by the chosen terms.

## Claims

1. A holding device of a removable mirror element (13) for a rearview mirror (10) for a motor vehicle, comprising ;

a supporting member (18, 19, 75) ;

a mirror holder (15) having a mirror plate (14) ;

a holder plate (17) ;

a pivot means (33) for tiltably supporting the holder plate (17) to the supporting member (18, 19, 75), said pivot means (33) being provided on the one surface of the holder plate (17) ;

characterized by

means (50) for latching the mirror holder (15) to the holder plate (17), said means being formed between surfaces of the holder plate (17) and the mirror holder (15) facing each other and further formed at the upper portion of the pivot means (33) ;

a fixing means (55) for connecting and locking the mirror holder (15) to the holder plate (17), said fixing means being formed between surfaces of the holder plate (17) and the mirror holder (15) facing each other and further formed at the lower portion of the pivot means ;

said fixing means (55) being integrally formed with one of the facing surfaces and having a pair of studs (58) protruding forwardly and a pair of sockets (56) formed opposite to the studs (58) on the other surface thereof ; and said studs (58) being resiliently engaged with said sockets (56).

2. A holding device as claimed in claim 1, characterized in that said latching means (50) comprises :

a hook shaped hook hanger (51) formed at the upper rear portion of the mirror holder (15),

a hole (52) formed in the upper portion of the holder plate (17) to allow the hook hanger (51) to penetrate thereinto ; and

a supporting rod (53) provided at the upper portion of the hole (52) to fasten the hook hanger (51).

3. A holding device as claimed in claim 1 or 2, characterized in that of said fixing means (55) : the pair of sockets (56) is formed at the lower portion of the mirror holder ; a bearing member (57) is disposed between the sockets (56) ; and the pair of studs (58) is formed at the lower front portion of the holder plate (17), said studs (58) being respectively inserted into the sockets (56) to resiliently hold the bearing means (57) on both sides.

4. A holding device as claimed in any of claims 1 to 3, characterized in that said latching means (50) and said fixing means (55) are symmetrically disposed on left and right sides between the holder plate (17) and the mirror holder (15).

5. A holding device as claimed in any of claims 1 to 4, characterized in that the mirror holder (15) further has an opening (16) at the center thereof to allow the holder plate (17) to be mounted thereon and the holder plate (17) has a central portion (47) at the center of the one surface thereof to be mounted to said opening (16).

6. A holding device as claimed in any of claims 1 to 5, characterized in that in one of the contacting surfaces of each of studs (91) and sockets (56), a recess (94) is provided for determining the location of the studs (91) and the sockets (56), and at the other of said contacting surfaces a projection (93) which engages with said recess (94) is disposed.

7. A holding device as claimed in claim 3 or in any of claims 4 to 6 if referred to claim 3, characterized in that the bearing means (57) further has an undercut portion (61) to which the end of the respective stud (91) is fastened, and a pawl (92) is provided on the end of each of the studs (91) for engaging with said undercut portion (61) (Fig.s 15, 16).

8. A holding device as claimed in claim 3 or 7 or in any of claims 4 to 6 if referred to claim 3, characterized in that the bearing means (57) further has a recess opening (59) rearwardly and a filler materials (M) is filled in said recess opening (59) for adjusting the bending or modifying degree of said bearing member (57) (Fig. 19B).

9. A holding device as claimed in any of claims 1 to 8, characterized in that the supporting member (18, 19, 75) has a spherical socket (29) for supporting the pivot means (33) disposed on the holder plate (17) and said pivot means (33) and said spherical socket (29) are engaged with each other by a connecting member (30) having means (38, 42) for adjusting an engaging torque.

10. A holding device as claimed in any of claims 1 to 9, characterized in that the supporting member (18, 19) is a remote control type actuator (12) adjusting the reflecting angle of the mirror.

## Patentansprüche

1. Haltevorrichtung für ein abnehmbares Spiegelelement (13) eines Rückblickspiegels (10) für ein Motorfahrzeug, mit :

— einem Tragglied (18, 19, 75) ;

— einem Spiegelhalter (15) mit einer Spiegelplatte (14) ;

— einer Halterplatte (17) ;

— einer Verschwenkeinrichtung (33) zum verschwenkbaren Tragen der Halterplatte (17) am Tragglied (18, 19, 75), wobei die Verschwenkeinrichtung (33) an der einen Seite der Halterplatte (17) sitzt ; gekennzeichnet durch

— eine Einrichtung (50) zum Einklinken des Spiegelhalters (15) an der Halterplatte (17), wobei diese Einrichtung zwischen den Seiten der Halterplatte (17) und des Spiegelhalters (15), die gegeneinander gerichtet sind, und außerdem am oberen Teil der Verschwenkeinrichtung (33) gebildet sind ;

— eine Befestigüngseinrichtung (55) zum Verbinden und Verriegeln des Spiegelhalters (15) an der Halterplatte (17), wobei die Befestigungsvorrichtung zwischen den Seiten der Halterplatte (17) und des Spiegelhalters (15), die gegeneinander gerichtet sind, und außerdem am unteren Teil der Verschwenkeinrichtung gebildet ist ;

wobei die Befestigungseinrichtung (55) integral mit einer der gegeneinander gerichteten Seiten gebildet ist und zwei Stifte (58) aufweist, die nach vorne abstehen, sowie zwei Buchsen (56) aufweist, die den Stiften (58) auf der anderen dieser Seiten gegenüberliegend angeordnet sind ; wobei die Stifte (58) sich in federndem Eingriff mit den Buchsen (56) befinden.

2. Haltevorrichtung nach Anspruch 1, dadurch gekennzeichnet, daß die Einrichtung (50) zum Einklinken folgende Teile umfaßt :

— einen hakenförmigen Hakenhänger (51), der am oberen hinteren Endteil des Spiegelhalters (15) gebildet ist,

— ein im oberen Teil der Halterplatte (17) gebildetes Loch (52), in das der Hakenhänger (51) eindringen kann, und

— eine am oberen Teil des Lochs (52) befindliche Trägerstange (53) zum Befestigen des Hakenhängers (51).

3. Haltevorrichtung nach Anspruch 1 oder 2, dadurch gekennzeichnet, daß von der Befestigungseinrichtung (55) : die beiden Buchsen (56) am unteren Teil des Spiegelhalters (15) gebildet sind ; ein Lagerglied (57) zwischen den Buchsen (56) angeordnet ist; und die beiden Stifte (58) am unteren Vorderteil der Halterplatte (17) gebildet sind und in die jeweilige Buchse (56) eingesteckt sind, um das Lagerglied (57) auf beiden Seiten federnd zu halten.

4. Haltevorrichtung nach einem der Ansprüche 1 bis 3, dadurch gekennzeichnet, daß die Einklinkeinrichtung (50) und die Befestigungseinrichtung (55) rechts und links symmetrisch zwischen der Halterplatte (17) und dem Spiegelhalter (15) angeordnet sind.

5. Haltevorrichtung nach einem der Ansprüche 1 bis 4, dadurch gekennzeichnet, daß der Spiegelhalter (15) weiterhin eine Öffnung (16) an seinem Mittelteil aufweist, an dem hierdurch die Halterplatte (17) montierbar ist, und daß die Halterplatte (17) einen mittleren Teil (47) im Zentrum einer ihrer Seiten aufweist, der an dieser Öffnung (16) zu montieren ist.

6. Haltevorrichtung nach einem der Ansprüche 1 bis 5, dadurch gekennzeichnet, daß in einer der sich berührenden Flächen jedes Stift-Buchsen-Paars (91, 56) eine Vertiefung (94) zur Festlegung der Lage des Stifts (91) und der Buchse (56) und an der anderen dieser sich berührenden Flächen ein Vorsprung (93), der in die Vertiefung (94) eingreift, angeordnet sind.

7. Haltevorrichtung nach Anspruch 3 oder einem der auf Anspruch 3 rückbezogenen Ansprüche 4 bis 6, dadurch gekennzeichnet, daß die Lagereinrichtung (57) einen hinterschnittenen Teil (61) aufweist, an dem das Ende des jeweiligen Stifts (91) befestigt ist, und daß sich am Ende jedes der Stifte (91) eine Klaue (92) zum Eingreifen in den hinterschnittenen Teil (61) befindet (Fig.n 15, 16).

8. Haltevorrichtung nach Anspruch 3 oder 7 oder einem der auf Anspruch 3 rückbezogenen Ansprüche 4 bis 6, dadurch gekennzeichnet, daß die Lagereinrichtung (57) eine sich nach hinten öffnende Vertiefung (59) aufweist, in die zum Justieren des Biege- oder Veränderungsgrads des Lagerglieds (57) ein Füllmaterial (M) eingefüllt ist (Fig. 19B).

9. Haltevorrichtung nach einem der Ansprüche 1 bis 8, dadurch gekennzeichnet, daß das Tragglied (18, 19, 75) eine sphärische Aufnahme (29) zum Tragen der an der Halterplatte (17) angeordneten Verschwenkeinrichtung (33) aufweist und die Verschwenkeinrichtung (33) und die sphärische Aufnahme (29) aneinander durch ein Verbindungsglied (30) mit einer Einrichtung (38, 42) zum Justieren des Angreifmoments angreifen.

10. Haltevorrichtung nach einem der Ansprüche 1 bis 9, dadurch gekennzeichnet, daß das Tragglied (18, 19) ein fernsteuerungsmäßiger Aktuator (12) ist, der den Reflexionswinkel des Spiegels justiert.

**Revendications**

1. Dispositif de maintien pour élément réflecteur amovible (13) d'un rétroviseur (10) de véhicule automobile, comprenant :

— un élément de support (18, 19, 75) ;

— un porte-miroir (15) muni d'une plaque réflectrice (14) ;

— une plaque de retenue (17) ;

— des moyens à pivot (33) pour monter de façon inclinable la plaque de retenue (17) sur l'élément de support (18, 19, 75), ces moyens à pivot (33) étant disposés sur une surface de la plaque de retenue (17),

caractérisé par

— des moyens (50) pour verouiller le porte-miroir (15) sur la plaque de retenue (17), ces moyens étant formés entre des surfaces de la plaque de retenue (17) et du porte-miroir (15) se faisant mutuellement face et étant en outre formés à la partie supérieure des moyens à pivot (33) ;

— des moyens de fixation (55) pour raccorder et bloquer le porte-miroir (15) sur la plaque de retenue (17), ces moyens de fixation étant formés entre les surfaces de la plaque de retenue (17) et du porte-miroir (15) se faisant mutuellement face et étant en outre formés à la partie inférieure des moyens à pivot,

lesdits moyens de fixation (55) étant formés d'une seule pièce avec l'une des surfaces se faisant face et comprenant une paire de tenons (58) en saillie vers l'avant et une paire de mortaises (56) formées en face des tenons (58) sur l'autre surface ; et lesdits tenons (58) étant en prise élastique avec lesdites mortaises (56).

2. Dispositif de maintien selon la revendication 1, caractérisé en ce que lesdits moyens de verrouillage (50) comprennent :

— un tenon d'accrochage en forme de crochet (51) formé à la partie supérieure arrière du porte-miroir (15) ;

— un trou (52) formé dans la partie supérieure de la plaque de retenue (17) de sorte que le tenon d'accrochage (51) puisse y pénétrer ; et

— une tige de support (53) disposée à la partie supérieure du trou (52) pour assujettir le tenon d'accrochage (51).

3. Dispositif de maintien selon la revendication 1 ou 2, caractérisé en ce que desdits moyens de fixation (55) : la paire de mortaises (56) est formée à la partie inférieure du porte-miroir ; un élément portant (57) est disposé entre les mortaises (56) ; et la paire de tenons (58) est formée à la partie inférieure avant de la plaque de retenue (17), ces tenons (58) étant insérés respectivement dans les mortaises (56) pour maintenir de façon élastique les éléments portants (57) des deux côtés.

4. Dispositif de maintien selon l'une quelconque des revendications 1 à 3, caractérisé en ce que lesdits moyens de verrouillage (50) et lesdits moyens de fixation (55) sont disposés symétriquement sur les côtés gauche et droit entre la plaque de retenue (17) et le porte-miroir (15).

5. Dispositif de maintien selon l'une quelconque des revendications 1 à 4, caractérisé en ce que le porte-miroir (15) comporte en outre une ouverture (16) au centre pour que la plaque de retenue (17) puisse être montée sur lui, et en ce que la plaque de retenue (17) comporte, au milieu de sa surface, une partie centrale (47) destinée à être montée dans ladite ouverture (16).

6. Dispositif de maintien selon l'une quelconque des revendications 1 à 5, caractérisé en ce qu'il est formé, dans l'une des surfaces de contact de chacun des tenons (91) et des mortaises (56), un creux (94) pour déterminer la position des tenons (91) et des mortaises (56) et en ce qu'il est disposé, sur l'autre desdites surfaces de contact, une saillie (93) qui s'engage dans ledit creux (94).

7. Dispositif de maintien selon la revendication 3 ou l'une quelconque des revendications 4 à 6 rattachée à la revendication 3, caractérisé en ce que l'élément portant (57) présente en outre une partie en contre-dépouille (61) sur laquelle est assujettie l'extrémité du tenon (91) respectif, et en ce qu'un doigt d'encliquetage (92) est prévu à l'extrémité de chacun des tenons (91) pour être mis en prise avec ladite partie en contre-dépouille (61) (fig. 15, 16).

8. Dispositif de maintien selon la revendication 3 ou 7 ou l'une quelconque des revendications 4 à 6 rattachée à la revendication 3, caractérisé en ce que l'élément portant (57) présente en outre un creux (59) s'ouvrant vers l'arrière, et en ce qu'une matière de remplissage (M) est chargée dans ce creux (59) pour régler le degré de flexion ou de changement de forme dudit élément portant (57) (fig. 19B).

9. Dispositif de maintien selon l'une quelconque des revendications 1 à 8, caractérisé en ce que l'élément de support (18, 19, 75) comporte un logement sphérique (29) pour supporter les moyens à pivot (33) disposés sur la plaque de retenue (17), et en ce que lesdits moyens à pivot (33) et ledit logement sphérique (29) sont maintenus en prise-mutuelle par un élément de liaison (30) comportant des moyens (38, 42) pour régler le couple de serrage.

10. Dispositif de maintien selon l'une quelconque des revendications 1 à 9, caractérisé en ce que l'élément de support (18, 19) est une unité d'actionnement (12) du type à commande à distance servant au réglage de l'angle de reflexion du miroir.

FIG. 2

FIG. 1

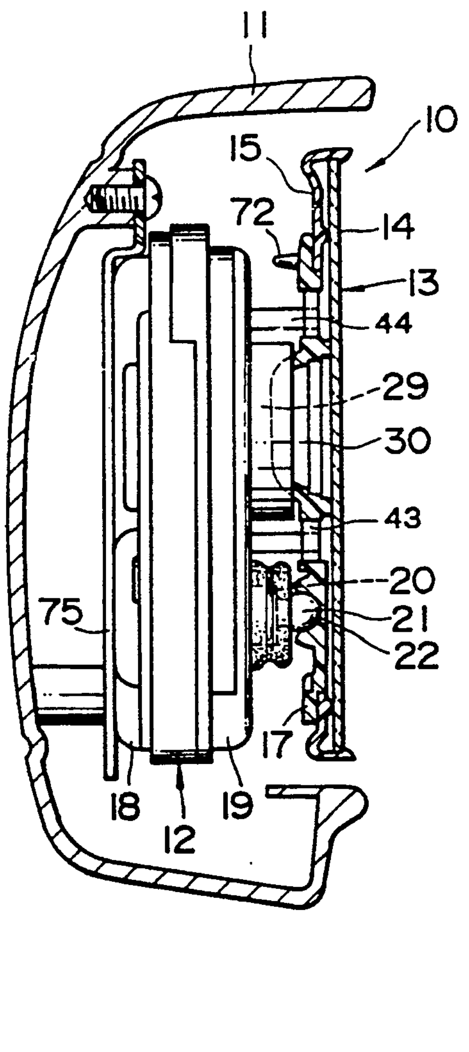
11
10
15
72
14
13
44
29
30
43
20
21
22
75
17
18
12
19

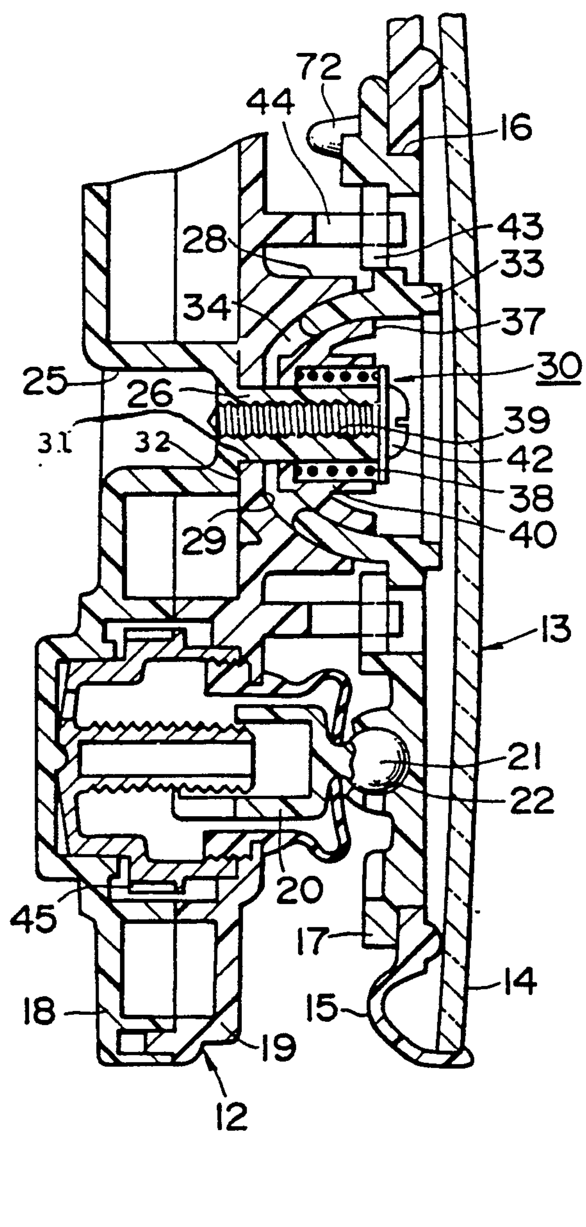
72
44
16
43
28
33
34
37
25
30
26
39
31
32
42
38
29
40
13
21
22
45
20
17
18
15
14
19
12

FIG. 3

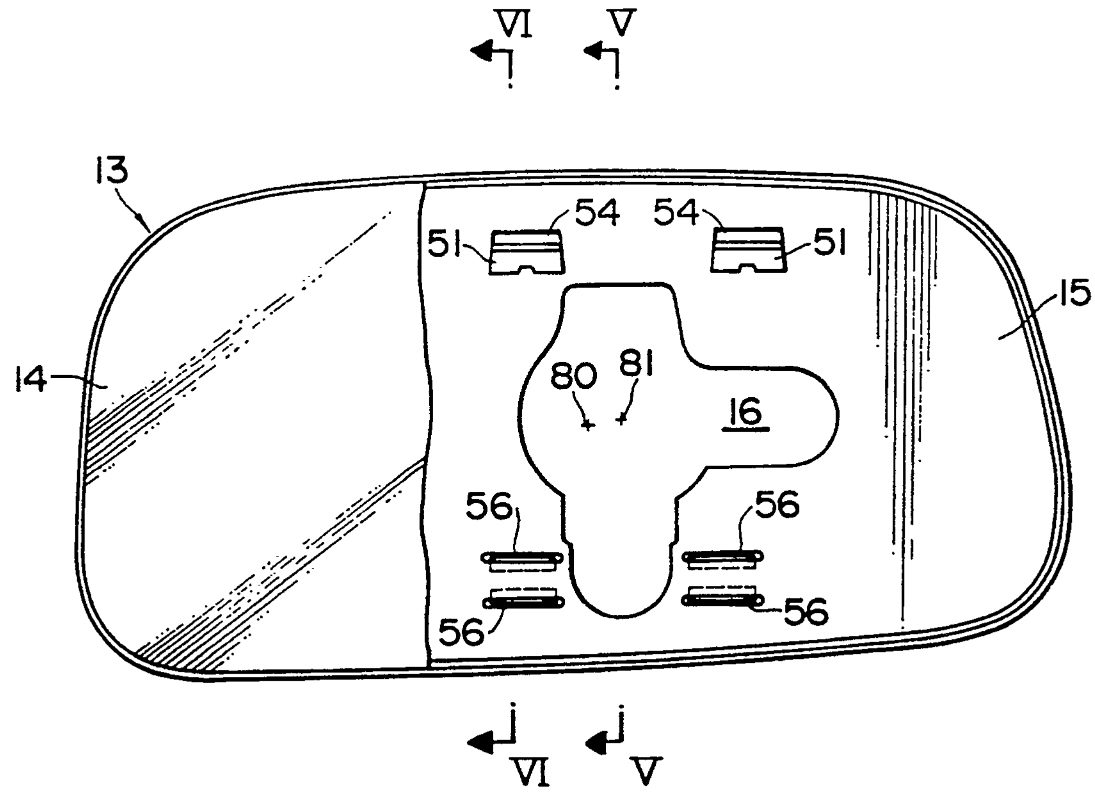
VI
V
13
54
54
51
51
15
14
80
81
16
56
56
56
56
VI
V

FIG. 4

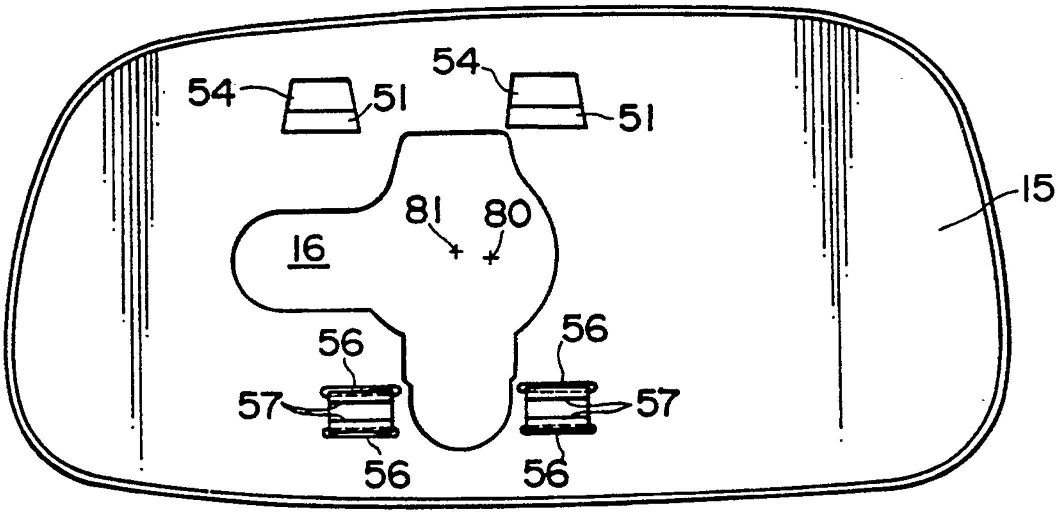
54
54
51
51
15
81
80
16
56
56
57
57
56
56

FIG. 5

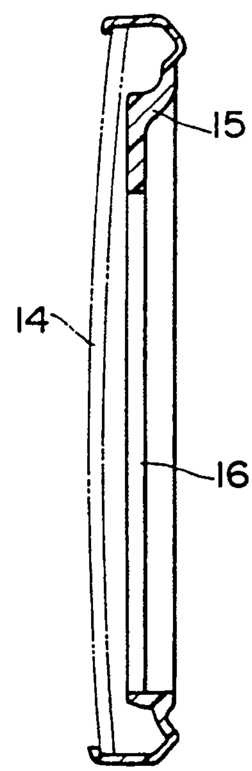


FIG. 6

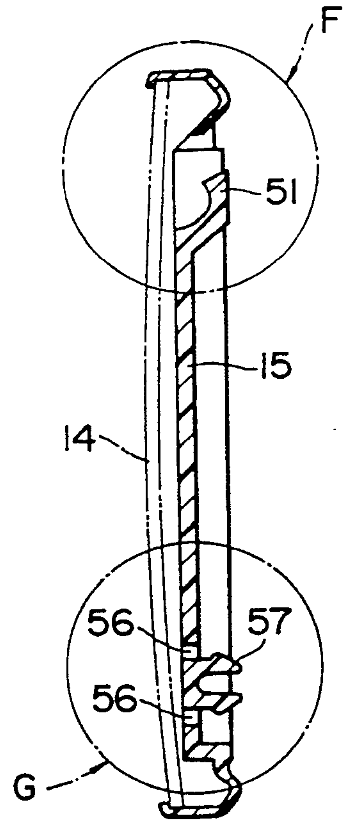


FIG. 7

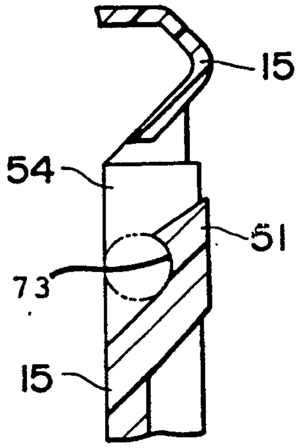


FIG. 8

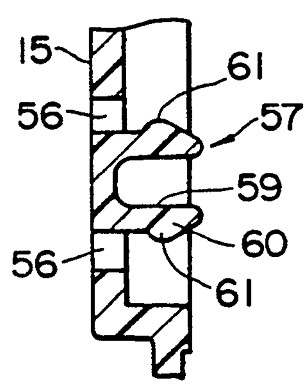

FIG. 9

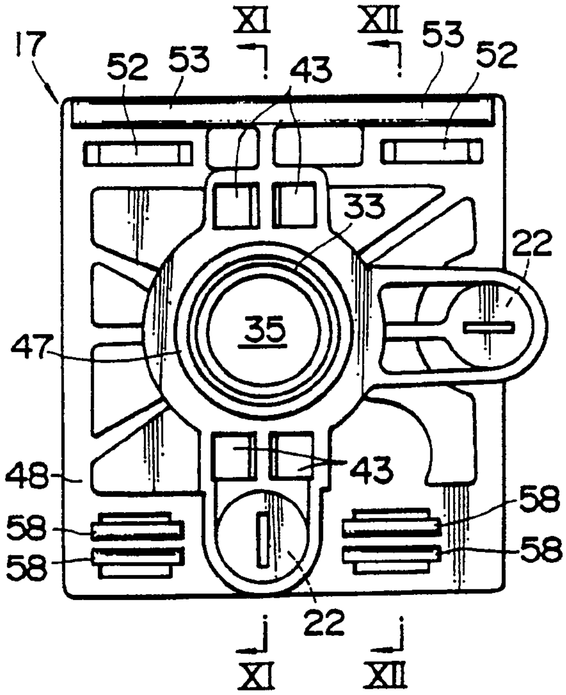


FIG. 10

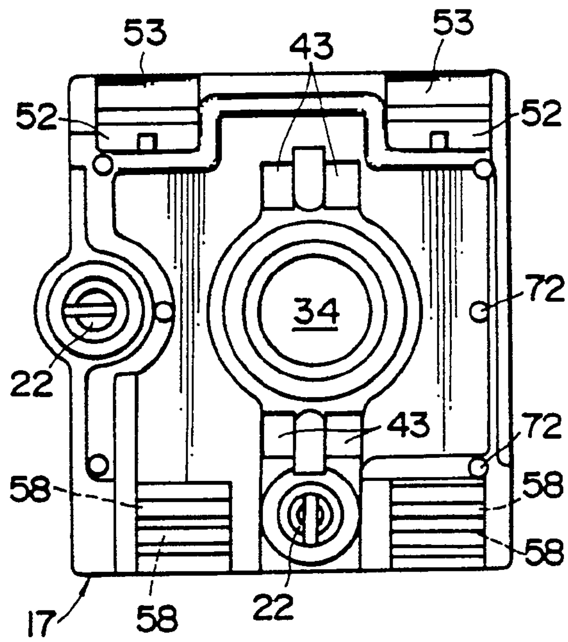


FIG. 11

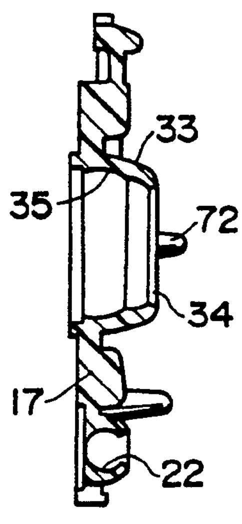


FIG. 12

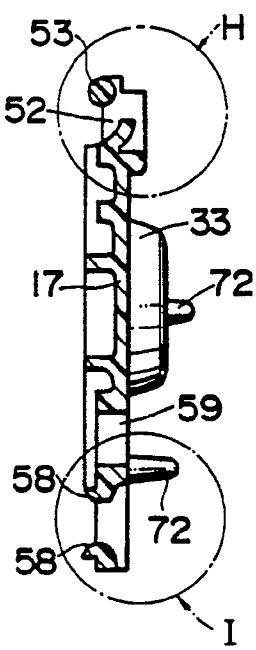


FIG. 13

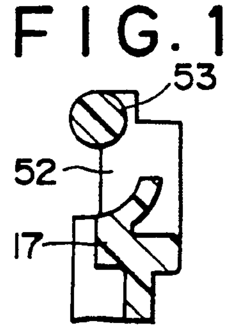


FIG. 14

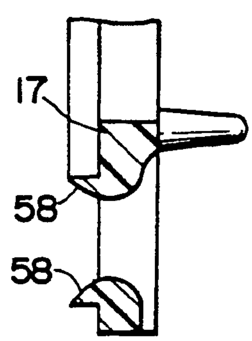

FIG. 15

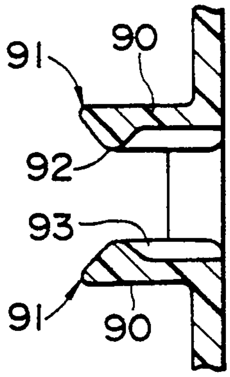


FIG. 16

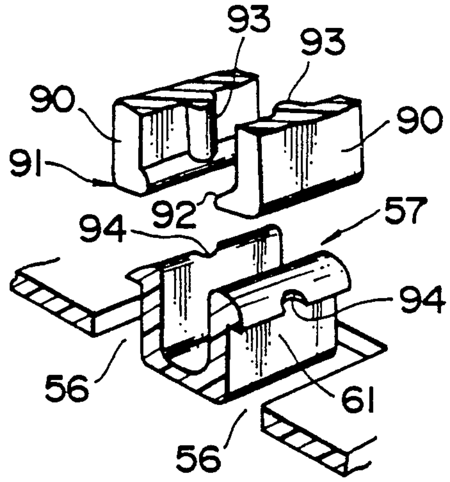


FIG. 17

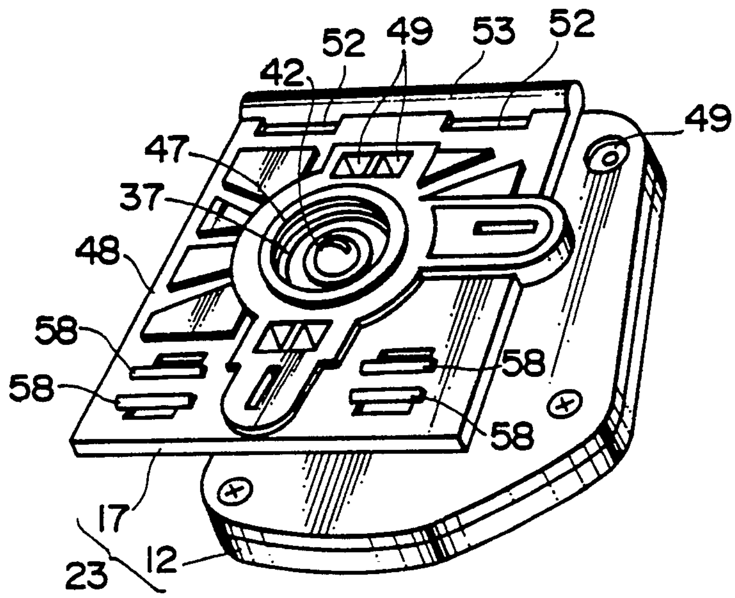

FIG. 18

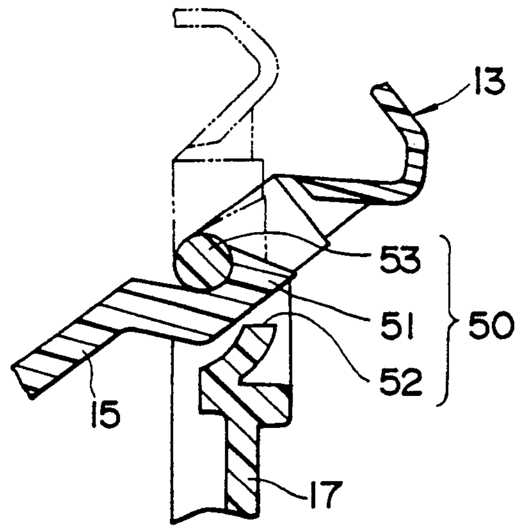


FIG. 19A

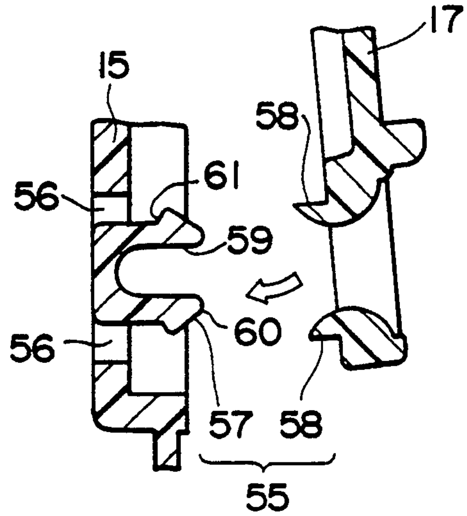


FIG. 19B